# EUROPEAN PATENT APPLICATION

(11) **EP 1 374 682 A1**
(43) Date of publication of application: **02.01.2004**
(21) Application number: 03396062.6
(22) Date of filing: 19.06.2003
(51) Int. Cl.: A21B 3/13

(54) **Method for facilitating the transfer and packaging of foodstuffs**

(30) Priority: 20.06.2002 FI 20021220
(71) Applicant: Myllyn Paras Oy, 05800 Hyvinkää (FI)
(72) Inventor: Savela, Pekka, 05830 Hyvinkää (FI); Myllärinen, Päivi, 00190 Helsinki (FI); Autio, Karin, 02940 Espoo (FI)
(74) Representative: Knuth-Lehtola, Sisko Hillevi

(57) **Abstract**

The invention relates to a method that can be used to transfer foodstuffs in a frozen form from the place of manufacture to the application or for further processing. According to the method, the foodstuff is fixed to a base, such as baking paper, which endures freezing and transferring, by means of a fixing agent composition not harmful for human consumption, the base with the foodstuff is frozen and, after freezing, the base with the foodstuff in the frozen state is transferred to be further processed. The fixing agent composition attaches the foodstuff to the base during freezing, but after baking, the foodstuff is easy to detach. The composition comprises a biopolymer and a softening agent.

## Description

The object of the present invention is a method according to the preamble of claim 1 for transferring foodstuffs, use of a fixing agent composition according to claim 9 and a base including foodstuffs according to the preamble of claim 10.

In the food industry, there are stages of processing, wherein the foodstuff is deep- frozen when raw, semi-finished or finished, and transferred in the frozen state to the next processing stages and/or to be baked or packaged and transferred to the application, to be sold as such, etc. Today in bakeries, in particular, a great deal of bakery products are manufactured, which are transferred in a frozen form when raw, semi-finished or finished, to the subsequent stages of process, such as to be packed or baked, or for other further procedures. A customer can buy the bakery product in a frozen form, for example, and he or she can defreeze, leaven, add decoration and/or bake, or put the product directly to be baked. As the product should be as handy and labour saving as possible to handle, the times one must handle a single product should be as few as possible. At each stage of manufacture, it should be possible to handle the products in some sorts of batches, whereby the costs would be divided between several pieces of production and the benefits of a centralized manufacturing method could be utilized. Therefore, bakeries have started to deliver to their customers, bakery products in a frozen form, placed directly on baking sheets. The sheets have been transferred to the customer by means of castor pallets. It has been possible for the customer to transfer the sheets from the castor pallet directly to the oven, which as such is convenient; however, the mode of delivery also involves numerous problems, which make the operation more difficult and increase the costs.

When circulated by the customer, some sheets are lost, some get twisted during transportation and, therefore, they must be replaced with new ones. After the customer has returned the sheets, they must be cleaned before using again. At its worst, the shortage of sheets may even cause breaks in production in bakeries. The delivery on sheets is unprofitable for the bakeries also because it ties up capital in the sheets and castor pallets.

In other food industries, any products transferred in a frozen form similarly tie up manufacturing, transferring or freezing bases, baking sheets and space and capacity for transportation, etc.

Patent publications disclose methods, wherein, for example, a raw dough, pizza or another bakery product is packed on a designed base and frozen on the base (US 5,919,508 and US 5,503,860, FR 2747887), or materials that can be used for packing bakery products (EP1060669). A method is also known from patent publications, wherein, when freezing, the bakery product is attached between two cooling arrays, the product being easy to detach from the one, and difficult to detach from the other (JP 10075706), a method, wherein bread is transferred to be compacted and frozen on a fibrous base after baking (JP 09313093). Furthermore, a method is known, wherein frozen bread is attached to a fibrous base by means of a fixing agent to be heated in a microwave oven (JP 09135657). However, the said publications do not solve the present problem. The publications do not describe a method that can be used to easily transfer frozen foodstuffs, which are to be baked, from one place to another.

The purpose of the present invention is to remove the problems related to known technology.

Surprisingly, in connection with the present invention, it has been discovered that it is possible to make the foodstuffs remain in place on the bases, such as baking paper sheets or the like, by means of a fixing agent composition developed in the invention, so well that the foodstuffs and their bases can be frozen and transferred to be baked, or packed when frozen and transferred directly from the package to be baked on the same bases. The present invention is based on the surprising observation that the fixing agent composition developed in the invention can be used to attach the foodstuffs to the base when frozen, but after baking, however, it is easy to detach the foodstuffs from the base.

The present invention thus provides a method for transferring foodstuffs, which comprises that the foodstuff is attached to a base, which endures freezing and transfer and on which the foodstuff can also be baked, by means of a fixing agent composition not harmful for human consumption, the composition being of the type that is capable of fixing the foodstuff to the base during freezing and allowing the foodstuff to detach from the base after baking. The foodstuffs and their base are frozen, whereby the fixing agent composition fixes the foodstuff to the base. After freezing the foodstuffs with their bases can be transferred to one or more further procedures, of which at least one is baking . Baking allows the foodstuffs to detach from the base. More specifically, the method according to the invention is mainly characterized by what is stated in the characterizing part of claim 1.

The use of a fixing agent composition is mainly characterized by what is stated in claim 9.

A base with foodstuffs is mainly characterized by what is stated in the characterizing part of claim 10.

The invention can be used, when frozen foodstuffs are transferred to the next stage of processing within the house, e.g., in the manufacture's premises, to the customer, to a shop or to any further processing. The invention can be used in any food processing industry, such as processing raw, semi-finished or finished meat or fish products, or processing convenience food, or in any other food industry, where there is a need for transferring frozen food products from one place to another for various further procedures, including baking.

The invention is especially well suited for transferring raw, semi-finished or finished bakery products in a frozen form. The base with bakery products is frozen, whereby the fixing agent composition attaches the bakery products to the base. When frozen, the base with the bakery products can be directly transferred to baking or various further processing stages, such as packing, transferring to the customer, thawing, leavening and/or decorating and baking.

The fixing agent composition according to the invention preferably comprises a biopolymer which, when frozen, fixes the foodstuff to the base. The base should then naturally be capable of enduring freezing and transferring. As the purpose is to bake the foodstuffs, the base should be also of the kind that it is possible to do the baking with the foodstuff placed on the base. To provide good adherence, it is preferable to change the structure of the biopolymer by means of a suitable method, such as making the biopolymer plastic by means of heat treatment, for example. The biopolymer can be, e.g., protein-based or starch-based or it can comprise both. A composition comprising plasticized starch is particularly good for fixing. Furthermore, it is advantageous for the composition to further comprise a substance that prevents the fixing agent composition from glazing, when the foodstuff is frozen. Such substances include, for example, polyols, especially sugar alcohols, such as sorbitol, xylitol and glycerol. A particularly preferred substance for the purpose according to the invention is glycerol. A preferred fixing agent composition comprises plasticized starch and polyol.

Glazing means that below a certain temperature (the glass transition temperature, the glass transition point or the vitrification point), the amorphous material is glasslike, stiff, and it does not move.

The adhesion induced by the composition takes place during the freezing of the foodstuff product and remains when, after freezing, the frozen products are transferred for further processing, for example, into crates, from where the products can be moved directly to baking or next processing stages, such as thawing, leavening and/or decoration and baking in case of a bakery product, or thawing, seasoning or other procedures and baking in case of meat, fish or other foodstuffs. During baking, the effect of the fixing agent composition stops and it is easy to detach the foodstuffs from the base.

The invention provides considerable advantages. In no case does the need for labour increase per single product that is to be manufactured. The logistics, as a whole, become simpler and easier, and the processing stages and transferring become lighter. The method according to the invention is suitable for transferring all frozen products from the place of manufacture to be packed for further processing, or to the subsequent stage of processing.

Next, the invention will be more closely examined with the aid of a detailed description and some examples of application.

The "fixing agent composition" herein refers to any composition, which is not harmful for human consumption and which is capable of fixing the foodstuff to the base during freezing, however, so that the foodstuff is easy to detach after baking. The composition not harmful for human consumption refers to a composition that causes no harm to the organism, even if some residues of the composition remained in the foodstuff after baking. If the entire foodstuff is to be eaten, as in the case of bakery products, the fixing agent composition must be edible. The fixing agent composition preferably comprises a biopolymer suitable for using in foodstuffs. The biopolymer can be protein-based and/or starch-based, preferably starch-based. It can be, for example, flour that normally comprises 90% of starch, 9 to 13% of protein, and some fat. Furthermore, it is preferable that the structure of the biopolymer is changed to ensure better adherence. For example, it is advantageous to convert the structure of the starch and/or protein into a plasticized form. This can be done, for example, by heating the starch and/protein at a suitable temperature long enough to achieve plasticizing. The starch is most preferably native starch. It can originate in potato, tapioca, sago or a similar tuber-bearing plant or barley, wheat, oats, maize, rice, peas, or a similar grain plant. The starch preferably originates in wheat or maize. When selecting the source of starch, the raw material used in the manufacture of the bakery product can be considered. It may be preferable to use the same starch in the fixing agent composition as the one the bakery product is made of. This could be of an especial importance when making bakery products that suit people suffering from various allergies to grain.

The softener of the fixing agent composition can suitably be a substance, which is well suited to foodstuffs and prevents the fixing agent composition from glazing at the freezing temperatures of the foodstuff. The freezing temperature of bakery products is normally -25 to -30°C. The temperature can be higher or considerable lower than this. The freezing temperatures of different foodstuffs also vary. The softeners used can comprise, e.g., polyols, sugar alcohols in particular, such as sorbitol, xylitol and/or glycerol. An especially good substance for the softener is glycerol. Those skilled in the art can easily find a substance that softens the fixing agent composition of the respective foodstuff and prevents the fixing agent from glazing especially at the processing temperatures of the respective foodstuff.

When using starch, the ratio of starch and softening agent in the fixing agent composition can range between 30 parts/70 parts and 95 parts/5 parts. The composition works better, if the ratio is from 50 parts/50 parts to 90 parts/10 parts, and even better, if the ratio of starch and softener is from 60 parts/40 parts to 80 parts/20 parts. It has been discovered that the composition with a ratio of starch and softener of about 70 parts of starch/30 parts of softener is the most preferable.

On the basis of their knowledge and the literature, those skilled in the art can find a suitable biopolymer for the fixing agent composition, and if the biopolymer does not naturally remain gummy when frozen, they can find a suitable softener that keeps the biopolymer flexible during freezing. Selecting the correct ratio of biopolymer and softener creates no problem to those skilled in the art.

The content of the composition comprising biopolymer in an aqueous working solution is preferably 5 to 20% by weight, typically 8 to 15 % by weight, and a composition with a content of 10 to 20% by weight is most preferable. These ratios are particularly suitable, when starch is used as biopolymer.

The fixing agent composition can also comprise small amounts of substances other than the above-mentioned substances that are not harmful for human consumption, such as colouring or flavouring agents or other substances, which can be used to improve the appearance or the taste of the foodstuff, for example. The fixing agent composition can comprise a colouring agent also to make it easier to observe the alignment of the fixing agent and/or the fixing point of the foodstuff.

The fixing agent composition is manufactured so that the biopolymer, preferably starch, e.g., maize flour, wheat flour or flour from another grain, and the softener are mixed with the aqueous solution and the aqueous solution is boiled until the biopolymer, preferably starch, is gelatinised or plasticized. The finished fixing agent composition must be kept hot until used; otherwise the composition will solidify too early and cannot be dosed in the desired manner. It is preferable to keep the composition in a water bath or the like, for example, until the composition is spread on the mounting base.

The fixing agent can be spread on the mounting base by wiping, draining or dropping a drop or drops, atomising, spraying or in some other way, preferably by a means that are easy to automate. The fixing agent composition can be spread either on part of the mounting base or on the entire mounting base, or the fixing agent can be focused especially at the spots, where the foodstuff is to be attached to.

The fixing agent composition that is spread on the mounting base is preferably preselected so that there is an amount large enough for the composition under the foodstuff to spread over almost the entire area covered by the foodstuff. If the covering area is less than half of the area covered by the foodstuff, the fixing agent composition cannot necessarily keep the foodstuff in place. Indeed, this depends on the shape, size, weight and composition of the foodstuff. In some cases, even a little dot of fixing agent composition can keep the foodstuff in place on the base. However, an average skilled worker can easily find a suitable amount and a way of dosing the fixing agent composition for each foodstuff. For example, tests carried out on bakery products of about 100 g showed that it is most preferable, if the fixing agent composition covers an essential part of the area covered by the bakery product. If, for example, the area covered by the fixing agent composition was larger than that covered by the bakery product, a lace tended to form around the bakery product, which as a rule is not desirable.

Any cellulose-containing fibre, which withstands freezing and transferring, and on which the foodstuffs can be baked, can be used as the mounting base. The base is preferably pastry paper or some other baking paper. As pastry paper already contains fat, it is the best paper for the invention. The base should not rip easily, and it should also endure lifting and packaging. As it is no longer necessary to move the foodstuffs with the base for subsequent further processing, the base does not necessarily have to endure or survive baking, but it should not be plastic or some other material that would not endure the baking temperatures normally used in ovens. Normally, the baked foodstuffs are recovered as such and transferred further.

Baking refers to maturing by means of a high temperature in an oven or the like at 60°C or higher, typically at 150°C or higher or at 200°C or higher.

Using the method according to the invention, the product can be made to stay in place on the base so that the base can be handled at each stage as a bunch of products, particularly when it is packed into a crate and unpacked, when it is baked or during some other procedure. The packaging stage and, correspondingly, the unpacking of the products can be automated.

The method according to the invention is suitable for handling various types of foodstuffs. For example, foodstuffs, which normally have been processed only once before delivering them to the consumer, the processing stage generally being carried out by the manufacturer. Examples of such foodstuffs include: fish, shellfish and other seafood, meat, such as veal, pork, mutton, game, chicken, minced meat, roast beef or fillet steak.

The method according to the invention is very well suited to handling such food, which has been processed more than once before delivering it to the consumer, such as the following convenience food: pizzas, hamburgers, sausage products, tortilla, veggieburgers, gratinated vegetables and milk products, such as cheese. This group also includes bread, pastries and other bakery products.

The present invention is especially well suited to handling bakery products. In the diagram below, the stages of the method according to the invention are compared with a method according to a known technique used in bakeries. In items 4 to 11 and 13 in particular, the method according to the invention is easier and quicker, it is easier to automate, and the productivity of the stage is better and/or the stage saves money. The number of other stages in the work process also decreases considerably; in other words, the process becomes simpler.

| Known technique | Method according to the invention |
|---|---|
| 1. Making the dough | 1. Making the dough |
| 2. Raising | 2. Raising |
| 3. Freezing | 3. Freezing |
| 4. Loading on a pan | 4. Loading on a baking base |
| 5. Transferring the pans into a transportation cage | 5. Crating and loading on pallets |
| 6. Moving the cage into a freezing store | 6. Moving the pallet into a freezing store |
| 7. Transfer to transportation | 7. Transfer to transportation |
| 8. Transportation to terminal | 8. Handling in terminal |
| 9. Transfer to transportation | 9. Transfer to transportation |
| 10. Unloading in the customer's | 10. Unloading in the customer's storage |
| storage | |
| 11. Transfer of pans on a baking peg | 11. Transfer to a pan, the pan onto a peg |
| 12. Packaging the finished product | 12. Packaging the finished product |
| 13. Transferring the pans to the cage | 13. Pans to the bakery's storage trolley |
| 14. Moving the cage to a space of storage | |
| 15. Transfer to transportation | |
| 16. Unloading the pans at the bakery's | |
| 17. Cleaning the pans | |
| 18. Moving the clean pans to the storage | |
| 19. Taking the pans from the storage, loading the products onto the pans. | |

According to a calculation, when the method according to the invention is used for transferring pies, for example, the customer saves 50 to 90% of the costs per pie blank compared with the method according to the known technique. This means considerable annual cost savings without having to add the costs at the other end of the chain, i.e., at the final manufacturer of the product.

The following non-limiting examples illustrate the invention:

### Example 1

The method according to the invention was examined using various bakery products. Wheat buns were manufactured according to the following recipe.

Wheat buns:
500g wheat flour
329g water

The dough was mixed with a Hobart dough mixer. The mixing speeds were: 1 (2 min) and 2 (4 min). The dough was allowed to lie for 10 min at room temperature before cutting into pieces. After lying, the dough was divided into about 11 pieces of 70 g (70.2 g to 70.4 g) each. The pieces of dough were rolled using Ekstensograph (for about 20 s).

A Christmas pastry was made of prefabricated sheets of dough (Pirkka) and ready-made plum sauce was added into the pastries.

A composition containing amylopectin starch or wheat flour as the source of starch was used as the fixing agent of the pastries. Glycerol was used as softener.

The ratio of starch or wheat flour and glycerol was 70:30 or 80:20, and working solutions of various percentages were diluted from these mixtures. The mixtures were heated in a water bath until they became adhesive, i.e., the starch was gelatinised. The solution was used when hot.

Baking paper, greaseproof paper, folio and/or just a pan, which was greased, was used as the mounting base for the pastries. The adhesive was spread on the surface of the paper by a brush.

After the products had been fixed to the base, they were frozen with their respective pans at 25°C.

### Example 2

In the test, the pastry was on baking paper on the pan, and some fixing agent composition had been added, except for the 0-test, which used nothing but baking paper.
0-test Baking paper only

Test 1. Baking paper + 5% of amylopectin + glycerol (70/30). The mixture was fairly loose. It showed a slight agglomeration on the baking paper.

Test 2. Baking paper + 10% of amylopectin + glycerol (70/30). The mixture was slightly thicker. The same phenomenon as above was observed.

Test 3. Baking paper + 15% of amylopectin + glycerol (70/30). The mixture was slightly thicker than the one containing 10% of amylopectin. The mixture was even, however.

Test 4. Baking paper + 8% of amylopectin + glycerol (70/30). The mixture was somewhere between the ones above.

Test 5. Baking paper + 5% of amylopectin + glycerol (80/20). As above.

Test 6. Baking paper + 8% of amylopectin + glycerol (80/20). As above.

It was examined, whether the pastry comes off the pans after freezing or not. In all other tests, except for the 0-test, the pastry adhered to the baking paper. The fixing agent had diffused through the baking paper on the pan and stuck to the pan. Only the pastry of the 0-test came off and moved on the baking paper.

After this, we examined whether the pastries would come off the paper after baking.

All pastries came off the baking paper very well. The one fixed with the mixture that contained 15% of amylopectin had maybe slightly adhered but it came off, anyway. The treatments gave some colour to the bottom of the buns after baking. Traces of lace might have also remained on the edges of the buns, similarly to those that had been brushed with egg.

### Example 3

Next, we tested greasing the pans or putting a folio under the baking paper. In tests 8, 10 and 11, fixing agent was placed on top of the baking paper.
0-test Folio + baking paper on the pan

Test 7. Greasing the pan + 15% of wheat flour on the baking paper

Test 8. Folio on the pan + the fixing agent according to test 3 on the baking paper (15% of amylopectin + glycerol (70/30)

Test 9. Greasing the pan + 15% of amylopectin on the baking paper

Test 10. Greasing the pan + the fixing agent according to test 6 on the baking paper (8% of amylopectin + glycerol (80/20)

Test 11. Folio on the pan + 15% of wheat flour + glycerol (70/30) on the baking paper

When examining the detachment of pastries after freezing, it was observed that only in tests 8 and 11, the pastry was firmly stuck to the baking paper; in test 11, the pastry had adhered to the paper extremely well. In test 7, the baking paper did not stick to the pan, but the buns came off the paper. In tests 9 and 10, and in the 0-test, the pastries came off the paper.

After baking, the pastries in all tests came off the paper. In some cases, there was a twig-like structure around the pastry, indicating that the fixing agent had spread outside the area covered by the pastry.

### Example 4

In the tests, greasing the pans or placing a folio under the baking paper was tested. Fixing agent was used on top of the baking paper in all others but the 0-test.
- 0-test: Greasing the pan + greaseproof paper
- Test 12: Greasing the pan + 15% of wheat flour + glycerol (70/30) on the greaseproof paper
- Test 13: Folio on the pan + 15% of wheat flour + glycerol (70/30) on the greaseproof paper
- Test 14: Greasing the pan + 20% of wheat flour + glycerol (70/30) on the greaseproof paper
- Test 15: Folio on the pan + 20% of wheat flour + glycerol (70/30) on the greaseproof paper

After freezing, the pastries in all others but the 0-test were firmly stuck to the paper.

After baking, the buns in all others but the 0-test were stuck to the paper; the paper came off the folio and the pan. In the 0-test, the paper came off the pan, and so did the buns.

### Example 5

In the following tests, a folio was placed on top of the pans and under the baking/greaseproof paper, and fixing agent was added in all others but the 0-test.
- 0-test: Folio/baking paper
- 0-test: Folio/greaseproof paper
- Test 16: Folio on the pan + 20% of wheat flour + glycerol (70/30) on the baking paper
- Test 17: Folio on the pan + 20% of wheat flour + glycerol (70/30) on the greaseproof paper

In tests 16 and 17, the pastries had adhered very well. In the 0-tests, the pastries came off, only the greaseproof paper showed some adherence.

After baking, the pastries in all tests came off.

### Example 6

In the following tests, it was examined, whether the pastries would stick when freezing for 7 days.

The pastries in tests 16 and 17 showed a firm adherence. In the 0-tests, the pastries came off but the greaseproof paper showed some adherence.

After baking, the pastries in all tests came off well but the greaseproof paper showed some adherence.

### Example 7

In the following tests, the same arrangements were used as above, but the pastries used were Christmas pastries.

The pastries in tests 16 and 17 were firmly stuck; in the 0-test, the pastries came off from both the baking paper and the greaseproof paper.

After baking, the pastries in all tests came off well, but the greaseproof paper again showed some adherence.

In the above tests, it turned out that the best fixing agent composition was the one comprising 70 parts of gelatinised wheat flour and 30 parts of glycerol in an aqueous solution, and the dry content of the composition was 20%.

The baking paper proved to be the best base. Furthermore, it was discovered in the tests that using folio under the baking paper prevented the fixing agent from going through the baking paper and onto the pan. Greasing showed no corresponding advantages.

It should be noted that in these tests the fixing agent was added onto the baking paper sheets that were on top of the baking pans. In that case, the folio prevented the fixing agent from going to the pan. Fat was also tested for preventing the fixing agent from going to the pan. When using the method according to the invention in production, a pure baking paper or a corresponding base will move on the production belt. In that case, there is naturally no need to use greasing or a folio below the baking paper or a corresponding base.

## Claims

1. A method for transferring foodstuffs, **characterized in that** the method comprises the steps:
- the foodstuff is attached to a base, which endures freezing and transfer and on which the foodstuff can also be baked, by means of a fixing agent composition not harmful for human consumption, the composition being of the type that is capable of fixing the foodstuff to the base during freezing and allowing the foodstuff to detach from the base after baking, and
- the foodstuffs and their base are frozen, whereby the fixing agent composition fixes the foodstuff to the base.

2. A method according to claim 1, **characterized in that** the foodstuff with its base is baked allowing the foodstuff to detach from the base.

3. A method according to claim 1 or 2, **characterized in that** the mounting base is made of cellulose-containing fibres.

4. A method according to any one of the preceding claims, **characterized in that** the fixing agent composition comprises a biopolymer.

5. A method according to any one of the preceding claims, **characterized in that** the fixing agent composition comprises plasticized starch and/or protein.

6. A method according to any one of the preceding claims, **characterized in that** the fixing agent composition comprises a softening agent that prevents the fixing agent composition from glazing at the treating temperatures of the foodstuff.

7. A method according to claim 6, **characterized in that** the softening agent is polyol.

8. A method according to any one of the preceding claims, **characterized in that** the foodstuff is a bakery product.

9. Use of a fixing agent composition for fixing foodstuffs to a base, which endures freezing and transferring and on which the foodstuffs can also be baked, said fixing agent composition being not harmful for human consumption, and being of the type that is capable of fixing the foodstuff to the base during freezing and allowing the foodstuff to detach from the base after baking.

10. A base with foodstuffs, wherein the foodstuffs are fixed to a base, which endures freezing and transferring and on which the foodstuffs can also be baked, by means of a fixing agent composition, **characterized in that** the fixing agent composition is not harmful for human consumption, and is of the type that is capable of fixing the foodstuff to the base during freezing and allowing the foodstuff to detach from the base after baking.
